# FASCICULE DE BREVET EUROPEEN

(11) **EP 1 022 238 B1**
(45) Date de publication et mention de la délivrance du brevet: **29.09.2004**
(21) Numéro de dépôt: 00101064.4
(22) Date de dépôt: 20.01.2000
(51) Int. Cl.: B65G 1/04

(54) **Installation de stockage pour magasins de produits longs disposés selon une orientation sensiblement verticale**
Speichervorrichtung für Magazine für längliche Produkte mit im wesentlichen senkrechter Ausrichtung
Storage device for magazines for long products having a substantially vertical orientation

(30) Priorité: 21.01.1999 IT VI990007
(43) Date de publication de la demande: 26.07.2000
(73) Titulaire: Matter s.r.l., 42020 Quattro Castella, Reggio Emilia (IT)
(72) Inventeur: Trento, Bruno, 30031 Dolo(VE) (IT)
(74) Mandataire: Bettello, Pietro, Dott. Ing.

(56) Documents cités:
- DE-A- 1 958 958
- PATENT ABSTRACTS OF JAPAN vol. 1999, no. 04, 30 avril 1999 (1999-04-30) & JP 11 011612 A (JAPAN NUCLEAR FUEL CO LTD<JNF>;HITACHI LTD), 19 janvier 1999 (1999-01-19)
- PATENT ABSTRACTS OF JAPAN vol. 1995, no. 11, 26 décembre 1995 (1995-12-26) & JP 07 228471 A (TOSHIBA ENG & CONSTR CO LTD;OTHERS: 01), 29 août 1995 (1995-08-29)
- PATENT ABSTRACTS OF JAPAN vol. 1996, no. 02, 29 février 1996 (1996-02-29) & JP 07 267314 A (NIPPON STEEL CORP), 17 octobre 1995 (1995-10-17)

## Description

La présente invention concerne une installation de stockage pour magasins de produits longs disposés selon une orientation sensiblement verticale.

Comme on le sait, les magasins de distribution de produits longs et lourds, en particulier des produits semi-ouvrés en acier, comportent toujours un grand danger lors des manoeuvres de stockage desdits matériels, tant par leur poids important, que du fait des difficultés de retenue et de prise de ceux-ci au moyen d'équipements adaptés.

Ces dangers concernent surtout le personnel préposé à ces opérations, mais également les équipements eux-mêmes qui, en cas d'accident, peuvent subir des avaries risquant d'interrompre la production avec un préjudice économique consécutif considérable.

Dans JP-11011612 est décrite une installation de stockage pour magasins de produits longs qui comprend un bâti vertical de réception desdits produits qui s'étend longitudinalement et est muni de logements adaptés pour accueillir un produit ou un tiroir de produits à stocker. Toutefois cette installation n'a pas la possibilité de déposer les produits horizontalement sur un rouleau de canvoyage.

L'invention se propose de pallier ces différents inconvénients. A cet effet, elle a pour objet une installation telle que définie à la revendication 1.

De la sorte, on simplifie considérablement les opérations de chargement et déchargement et on annule pratiquement le danger existant dans ce type d'opérations, chose particulièrement importante en cas de manipulation de produits longs d'un diamètre supérieur à 100 mm et ayant une longueur de 4-6 m.

On prévoit un chariot coulissant qui prélève le produit long, disposé selon une orientation paraverticale, c'est-à-dire sensiblement verticale, sur le bâti et, par un déplacement horizontal, porte ce produit en dehors dudit bâti. L'invention prévoit en outre une plate-forme avec plan escamotable qui retire ledit produit du chariot pour le déposer sur un rouleau horizontal de transfert.

Cette caractéristique permet également de réduire sensiblement l'espace occupé par le magasin, ainsi que de réduire les temps nécessaires pour les opérations de chargement et déchargement, avec des avantages considérables en matière de coûts d'exploitation correspondants.

De la sorte, on simplifie considérablement les opérations de chargement et déchargement et annule le danger existant dans ce type d'opérations, chose particulièrement importante en cas de manipulation de produits longs d'un diamètre supérieur à 100 mm et ayant une longueur de 4-6 m.

Selon une autre caractéristique, on a la possibilité de pouvoir prélever et stocker des barres individuelles en effectuant la sélection desdites barres.

L'invention sera décrite ci-après dans une de ses formes particulières de réalisation, donnée à simple titre d'exemple illustratif et non limitatif, à l'aide des schémas joints, où :
la fig. 1 représente une vue en élévation de l'installation de stockage visée dans l'invention ;
la fig. 2 représente une vue en plan de l'installation de la figure 1 ;
Les figures 3, 3A-3D représentent les phases de travail du dispositif d'extraction et de levage situé sur le chariot ;

Comme on le voit dans les figures, le bâti 1 comprend plusieurs produits longs 2, situés dans une position paraverticale et maintenus en cette position par la presence des sièges 14 et soutenus par les petits-pieds 15.

De manière frontale par rapport à la paroi définie par lesdits produits, se trouve un chariot 3, lequel coulisse sur toute la longueur de ladite surface et même au-delà, en allant ainsi se placer de façon à être exactement aligné à une plate-forme 4 située à l'intérieur d'un rouleau 5.

Cette plate-forme peut tourner entre une position horizontale et une position de prise sensiblement verticale, étant pivotée en 40.

D'un point de vue opérationnel, le chariot 3, par l'intermédiaire d'une commande PLC fournie par le programme de l'installation, se positionne de manière frontale par rapport au produit long 2 à prélever et, par l'intermédiaire du bras de prise 6, accroche ledit produit, au moyen de dispositifs connus en soi, tels que des crochets mécaniques, des ventouses ou des aimants, en le détachant du bâti et en l'attirant à soi, tout en le maintenant toujours dans une position paraverticale ou sensiblement verticale.

Avantageusement, il est prévu que la barre de prise 6 du chariot 3 est munie au niveau inférieur d'un dispositif 8 lequel, avant la prise, va se positionner en dessous du produit 2, en le soulevant légèrement et donc en facilitant l'action de détachement du bâti 1.

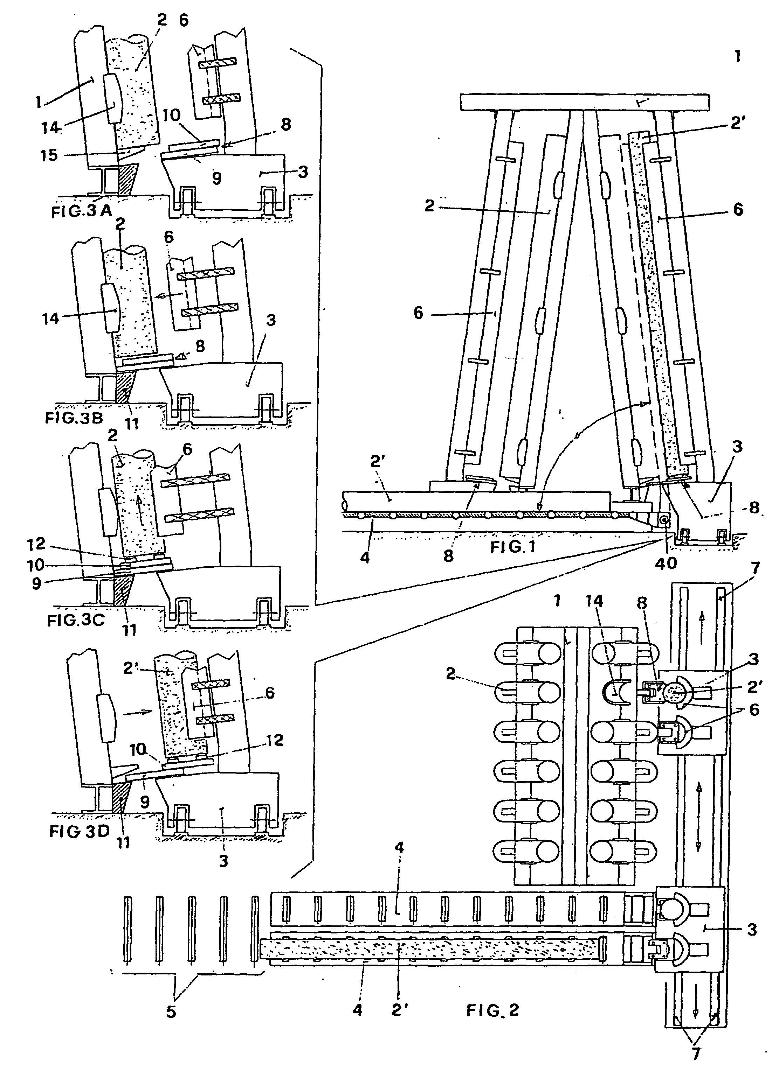

En détail, comme on le voit dans la figure 3, le dispositif 8 est constitué de deux bras 9 et 10, l'un superposé à l'autre, coulissant transversalement par rapport à la direction d'avancement du chariot, dont le bras 9 situé au niveau inférieur ressort jusqu'à aller trouver la base d'appui 11 de façon à servir de support ou de chemin de roulement pour le coulissement du bras 10 situé au niveau supérieur, quand ce dernier effectue les opérations d'accrochage, levage, extraction du produit ou du tiroir de produits à stocker.

D'un point de vue opérationnel, comme on le voit dans les phases illustrées de la fig. 3A à la fig. 3D, en conditions de repos, les deux bras 9 et 10 sont situés au-dessus du chariot 3 (voir fig. 3A).

Quand le chariot 3 est positionné face au produit ou paquet de produits 2 à prélever, tout d'abord le bras 9 inférieur ressort en allant s'appuyer sur la base 11 et le bras 10 supérieur ressort ensuite de façon à se placer en dessous dudit produit ou paquet de produits (voir fig. 3B).

Ensuite, des pousseurs 12, placés sur le bras 10 supérieur, sont actionnés et soulèvent légèrement le produit ou paquet de produits 2, qui est ensuite accroché par la barre de prise 6, de façon à faciliter l'opération d'extraction (voir fig. 3C).

L'opération se conclut avec le bras 10 qui accompagne le produit ou le tiroir de produits qui rentre. Ensuite, le bras 9 rentre également, en permettant au chariot de coulisser pour se porter au niveau du rouleau.

De même, pour l'insertion du produit ou du tiroir de produits dans le bâti, les opérations décrites ci-dessus sont réalisées dans le sens inverse.

Ensuite, le chariot 3, en coulissant sur les rails 7, s'aligne avec le rouleau 5 muni de la plate-forme avec plan escamotable 4, située au même niveau et contenue dans ledit rouleau.

Comme on le voit dans la fig. 1, au moyen de dispositifs mécaniques connus, comme des pistons oléodynamiques, le plan escamotable 4 effectue une rotation et vient en contact avec le produit long 2', qui est simultanément décroché du chariot 3 et soutenu et éventuellement raccroché par ledit plan escamotable.

Ensuite, le plan escamotable se remet en position horizontale, de sorte que le produit long 2' va se déposer au-dessus des rouleaux moteurs du rouleau 5 qui l'éloigne du magasin ou alimente une machine opératrice.

Il est possible d'apporter des variations, afin d'améliorer davantage la productivité de l'installation, à la forme de construction décrite dans les figures 1, 2.

A titre d'exemple, une première forme de variante de construction prévoit que le chariot sera doté de deux bras de prise 6 disposés de façon réciproquement opposée de façon qu'avec un seul chariot, on puisse opérer sur les faces opposées de deux bâtis adjacents.

Une seconde forme de variante de construction prévoit que chaque bras de prise 6 sera doté de doubles mécanismes de prise du produit de façon à permettre simultanément l'alimentation et la prise des produits sur le rouleau.

Les doubles mécanismes de prise sur chaque bras 6 permettent en outre la manipulation de deux produits situés sur le même logement de retenue du bâti, puisqu'il est possible, avec un mécanisme de prise, de soulever le produit placé au niveau supérieur et, en déplaçant légèrement le chariot, d'accrocher le produit qui se trouve au niveau inférieur dans le même logement avec le second mécanisme de prise.

Une troisième forme de réalisation prévoit que sur le chariot 3 est montée une structure verticale ayant une forme d'arc qui supporte des mécanismes de prise pouvant agir sur les faces opposées de deux bâtis adjacents, ce qui permet une réduction considérable de l'encombrement de toute l'installation, en optimisant ainsi l'espace destiné au stockage.

## Revendications

1. Installation de stockage pour magasins de produits longs (2) disposés selon une orientation sensiblement qui verticale, qui comprend un bâti (1), sensiblement vertical, de réception desdits produits (2), ledit bâti s'étendant longitudinalement et étant muni de logements adaptés pour accueillir un produit ou un tiroir de produits à stocker, ladite installation étant **caractérisée en ce qu'**elle comprend également un chariot (3) apte à se déplacer le long du bâti, ledit chariot coulissant étant apte à prélever les produits dudit bâti (1) et à les déposer horizontalement sur un rouleau (5) de convoyage des produits (2), et inversement le rouleau comprenant une plate-forme rotative (4) entre une position horizontale et une position de prise de produit sensiblement verticale, l'installation étant aussi **caractérisée par le fait que** le chariot (3) est apte à coulisser horizontalement au-delà de la paroi définie par les produits longs (2), de façon à être aligné avec ledit rouleau (5) de convoyage.

2. Installation de stockage, selon la revendication 1, **caractérisée par le fait que** le chariot (3) est pourvu d'un bras de prise (6) muni au niveau inférieur d'un dispositif de soulèvement (8), apte à se positionner au-dessous du produit (2') et à le soulever, de manière à faciliter l'action de détachement du bâti.

3. Installation de stockage, selon la revendication 2, **caractérisée par le fait que** le dispositif de soulèvement (8) comprend deux bras (9, 10) superposés aptes à coulisser transversalement par rapport à la direction d'avancement du chariot, un bras (9) inférieur faisant saillie jusqu'à entrer en contact avec une base d'appui (11), de façon à servir de support ou de chemin de roulement pour le coulissement du bras (10) supérieur, quand ce dernier effectue les opérations d'accrochage, levage, extraction du produit ou du tiroir de produits à stocker.

4. Installation de stockage, selon la revendication 3, **caractérisée par le fait que**, en conditions de repos, les deux bras (9, 10) sont situés au-dessus du chariot (3) et que lorsque le chariot (3) est placé face au produit ou paquet de produits (2) à prélever, le bras (9) inférieur est apte à faire saillie en premier de manière à s'appuyer sur la base (11), le bras supérieur (10) est apte à faire saillie ensuite, de façon à se positionner en dessous dudit produit ou paquet de produits, des pousseurs (12), placés sur le bras (10) supérieur, étant alors aptes à soulever légèrement le produit ou paquet de produits (2), qui est ensuite accroché par la barre de prise (6), de façon à faciliter l'opération d'extraction, le bras supérieur (10) accompagnant le produit ou le tiroir de produits qui rentre, après quoi, le bras inférieur (9) rentre également, en permettant au chariot (3) de coulisser pour se porter au niveau du rouleau (5), l'insertion du produit ou du tiroir de produits dans le bâti étant réalisée en effectuant les opérations décrites ci-dessus dans le sens inverse.

5. Installation de stockage, selon une ou plusieurs des revendications précédentes, **caractérisée par le fait que** chaque bras de prise (6) est doté de doubles mécanismes de prise du produit ou du tiroir de produits, de façon à permettre simultanément l'alimentation et la prise des produits sur le rouleau de convoyage (5).

6. Installation de stockage selon une ou plusieurs des revendications précédentes, **caractérisée par le fait que** chaque bras de prise (6) est doté de doubles mécanismes de prise du produit, de façon à permettre la manipulation de deux produits situés sur le même logement de retenue du bâti, puisqu'il est possible de soulever le produit situé au niveau supérieur avec un mécanisme de prise, et en déplaçant légèrement le chariot, avec le second mécanisme de prise, il est possible d'accrocher le produit qui se trouve au niveau inférieur dans le même logement.

7. Installation de stockage, selon une ou plusieurs des revendications précédentes, **caractérisée par le fait que** sur le chariot (3) est montée une structure verticale en forme d'arc qui supporte des mécanismes de prise, lesquels peuvent agir sur les faces opposées de deux bâtis adjacents.

8. Procédé de stockage qui utilise l'installation visée à la revendication 1, dans lequel le chariot (3), par l'intermédiaire d'une commande PLC fournie par le programme de l'installation, se place frontalement par rapport au produit long (2') à prélever et, par l'intermédiaire du bras de prise (6), accroche ledit produit, au moyen de mécanismes connus en soi, tels que des crochets mécaniques, des ventouses ou des aimants, en le détachant du bâti (1) et en l'attirant vers soi, en le maintenant toujours dans une position sensiblement verticale, ensuite ledit chariot (3) coulisse horizontalement, de préférence sur des rails (7) en s'alignant avec le rouleau de convoyage (5) muni d'une plate-forme avec plan escamotable (4) située au même niveau et contenue dans ledit rouleau, procédé dans lequel ladite plate-forme avec plan escamotable (4) se soulève par l'intermédiaire de dispositifs mécaniques connus, comme des pistons oléodynamiques, et vient en contact avec le produit long (2') qui est décroché des organes de prise du chariot (3) et simultanément soutenu et raccroché par le plan escamotable, ensuite, ledit plan escamotable se remet en position horizontale, de façon que le produit long (2') vienne se déposer sur le rouleau (5) qui l'éloigne du magasin.

9. Dispositif de soulèvement(8) du type défini dans les revendications 3 ou 4, à appliquer à un bâti pour magasins de tôles avec orientation sensiblement verticale.

## Patentansprüche

1. Speichervorrichtung für Magazine für längliche Produkte (2) mit im wesentlichen senkrechter Ausrichtung, mit einem im wesentlichen vertikalen Rahmengestell (1) zur Aufnahme der Produkte (2), wobei sich das Rahmengestell in Längsrichtung erstreckt und mit Vorrichtungen zur Aufnahme eines Produktes oder eines Kastens mit zu speichernden Produkten versehen ist, wobei die Vorrichtung **dadurch gekennzeichnet ist, dass** sie einen Schlitten (3) enthält, der entlang des Rahmengestells verschiebbar ist, wobei der gleitende Schlitten die Produkte von dem Rahmengestell (1) abheben und horizontal auf einen Rollenförderer (5) zur Hin- und Rückförderung der Produkte (2) absetzen kann, wobei der Rollenförderer eine zwischen einer horizontalen Position und einer im wesentlichen vertikalen Produktaufnahme-Position schwenkbare Plattform (4) besitzen kann, und wobei die Vorrichtung ebenfalls **dadurch gekennzeichnet ist, dass** der Schlitten (3) horizontal über die durch die länglichen Produkte (2) definierte Wand hinaus gleiten kann, so dass er mit dem Rollenförderer (5) ausgerichtet ist.

2. Speichervorrichtung nach Anspruch 1, **dadurch gekennzeichnet, dass** der Schlitten (3) mit einem Greifarm (6) ausgerüstet ist, der auf der unteren Ebene mit einer Hebeeinrichtung (8) versehen ist, welche unter das Produkt (2') fahren und dieses anheben kann, um das Lösen von dem Rahmengestell zu erleichtern.

3. Speichervorrichtung nach Anspruch 2, **dadurch gekennzeichnet, dass** die Hebeeinrichtung (8) zwei übereinander angeordnete Arme (9, 10) umfasst, die in Bezug auf die Richtung der Vorwärtsbewegung des Schlittens quer gleiten können, einen unteren Arm (9) der so weit herausfährt, bis er mit einer Auflagefläche (11) in Kontakt tritt, so dass dieser als Lagerfläche oder Rollweg für das Gleiten des oberen Armes (10) dient, wenn dieser die Operationen zum Einhängen, zum Anheben, zur Abnahme des Produktes oder des Kastens der zu speichernden Produkte durchführt.

4. Speichervorrichtung nach Anspruch 3, **dadurch gekennzeichnet, dass** die beiden Arme (9, 10) in Ruhestellung oberhalb des Schlittens (3) angeordnet sind, und dass - wenn der Schlitten (3) vor dem anzuhebenden Produkt oder Produktpaket (2) platziert ist - der untere Arm (9) zuerst derart vorfährt, dass er auf der Grundfläche (11) aufliegt, worauf der obere Arm (10) dann derart vorfährt, dass er sich unterhalb des Produktes oder Produktpakets befindet, dass dann auf dem oberen Arm (10) platzierte Schubvorrichtungen (12) das Produkt oder Produktpaket (2) leicht anheben können, welches dann mit dem Greifarms (6) aufgenommen wird, wodurch die Entnahme-Operation erleichtert wird, wobei der obere Arm (10) mit dem Produkt oder dem Produktkasten zurückfährt, wonach der untere Arm (9) ebenfalls zurückfährt, damit der Schlitten (3) sich bewegen kann, so dass er sich auf der Ebene des Rollenförderers (5) befindet, wobei das Einbringen des Produktes oder des Produktkastens in das Rahmengestell durch die oben beschriebenen Operationen im umgekehrten Sinn erfolgt.

5. Speichervorrichtung nach einem oder mehreren der vorhergehenden Ansprüche, **dadurch gekennzeichnet, dass** jeder Greifarm (6) mit doppelten Greifmechanismen für das Produkt oder den Produktkasten ausgestattet ist, so dass simultan die Bestückung und das Ergreifen der Produkte auf dem Rollenförderer (5) erfolgen kann.

6. Speichervorrichtung nach einem oder mehreren der vorhergehenden Ansprüche, **dadurch gekennzeichnet, dass** jeder Greifarm (6) mit doppelten Greifmechanismen für das Produkt ausgestattet ist, so dass die Handhabung zweier auf der gleichen Aufnahmeanordnung des Rahmengestells befindlicher Produkte erfolgen kann, da es möglich ist, das auf der oberen Ebene befindliche Produkt mit einem Greifmechanismus abzuheben, und durch geringfügiges Verschieben des Schlittens das Produkt mit dem zweiten Greifmechanismus zu ergreifen, das sich auf der gleichen Aufnahmefläche auf der unteren Ebene befindet.

7. Speichervorrichtung nach einem oder mehreren der vorhergehenden Ansprüche, **dadurch gekennzeichnet, dass** auf dem Schlitten (3) eine vertikale, bogenförmige Struktur angeordnet ist, welche die Greifmechanismen trägt, die auf die gegenüberliegenden Flächen zweier nebeneinander angeordneter Rahmengestelle einwirken können.

8. Speicherverfahren unter Verwendung der in Anspruch 1 beschriebenen Vorrichtung, bei dem sich der Schlitten (3) mit Hilfe einer PLC-Steuerung, die im Programm der Anlage enthalten ist, frontal vor dem zu entnehmenden länglichen Produkt (2') platziert und das genannte Produkt mittels des Greifarms (6) anhand eines an sich bekannten Mechanismus aufgehängt wird, wie z.B. mit Hilfe von mechanischen Haken, Saugnäpfen oder Magneten, indem das Produkt aus dem Rahmengestell (1) entnommen, herangezogen und dabei stets in einer annähernd vertikalen Position gehalten wird, wobei sich der genannte Schlitten (3) dann horizontal und vorzugsweise auf Schienen (7) bewegt und sich mit dem Rollenförderer (5) ausrichtet, der mit einer Plattform mit klappbarer Ebene (4) ausgerüstet ist, die sich auf der gleichen Höhe befindet und in dem genannten Rollenförderer enthalten ist, wobei sich die genannte Plattform mit klappbarer Ebene (4) mit Hilfe bekannter mechanischer Vorrichtungen, wie z. B. Öldruckkolben, hebt und mit dem länglichen Produkt (2') in Kontakt kommt, das von den Greifarmen des Schlittens (3) gelöst und gleichzeitig durch die klappbare Ebene gehalten und wieder gestützt wird, wobei die genannte klappbare Ebene sodann wieder die horizontale Position einnimmt, so dass das längliche Produkt (2') auf den Rollenförderer (5) abgelegt wird, der es aus dem Magazin entfernt.

9. Hebevorrichtung gemäß dem in den Ansprüchen 3 oder 4 beschriebenen Typ zur Verwendung bei einem Rahmengestell für Blechmagazine mit im wesentlichen vertikaler Ausrichtung.

## Claims

1. A storage installation for magazines of long products (2) disposed in a substantially vertical orientation, which comprises a substantially vertical support frame (1) for receiving said products (2), said support frame extending longitudinally and being provided with receiving means to accommodate a product or a drawer of products to be stored, said installation being **characterised in that** it also comprises a trolley (3) capable of displacement along the support frame, the sliding trolley being capable of removing the products from said support frame (1) and depositing them horizontally on a roller (5) for conveying the products (2) and vice-versa, the roller comprising a platform (4) rotatable between a horizontal position and a substantially vertical position for taking a product, the installation also being **characterised in that** the trolley (3) is capable of sliding horizontally beyond the wall defined by the long products (2) so as to be aligned with said conveying roller (5).

2. A storage installation according to claim 1 **characterised in that** the trolley (3) is provided with an engagement arm (6) provided at the lower level with a lifting device (8) capable of assuming a position below the product (2') and lifting it so as to facilitate the action of detachment from the support frame.

3. A storage installation according to claim 2 **characterised in that** the lifting device (8) comprises two superposed arms (9, 10) capable of sliding transversely with respect to the direction of advance movement of the trolley, a lower arm (9) projecting until it comes into contact with a support base (11) so as to act as a support or rolling track for the sliding movement of the upper arm (10) when the latter effects the operations of hookingly engaging, raising and extracting the product or the drawer of products to be stored.

4. A storage installation according to claim 3 **characterised in that** in the rest condition the two arms (9, 10) are disposed above the trolley (3) and that when the trolley (3) is disposed in facing relationship with the product or pack of products (2) to be removed the lower arm (9) is capable of projecting firstly in such a way as to be supported on the base (11), the upper arm (10) is then capable of projecting so as to assume a position below said product or pack of products, thrust members (12) disposed on the upper arm (10) then being capable of slightly lifting the product or pack of products (2) which is then hookingly engaged by the engagement bar (6) so as to facilitate the extraction operation, the upper arm (10) accompanying the product or the drawer of products which returns, whereupon the lower arm (9) also returns, permitting the trolley (3) to slide to move to the level of the roller (5), insertion of the product or the drawer of products into the support frame being effected by performing the above-described operations in the opposite direction.

5. A storage installation according to one or more of the preceding claims **characterised in that** each engagement arm (6) is provided with dual mechanisms for engagement of the product or the drawer of products so as to simultaneously permit supply and engagement of the products on the conveying roller (5).

6. A storage installation according to one or more of the preceding claims **characterised in that** each engagement arm (6) is provided with dual mechanisms for engagement of the product so as to permit manipulation of two products disposed on the same retaining receiving means of the support frame since it is possible to lift the product disposed at the upper level with an engagement mechanism and by slightly displacing the trolley with the second engagement mechanism it is possible to hookingly engage the product which is at the lower level in the same receiving means.

7. A storage installation according to one or more of the preceding claims **characterised in that** mounted on the trolley (3) is a vertical arcuate structure which supports engagement mechanisms which can act on the opposite faces of two adjacent support frames.

8. A storage process using the installation set forth in claim 1 in which the trolley (3), by way of a control PLC provided by the program of the installation, is placed in frontal relationship with respect to the long product (2') to be removed and, by way of the engagement arm (6), hookingly engages said product by means of per se known mechanisms such as mechanical hooks, suction cups or magnets, detaching it from the support frame (1) and drawing it towards itself, still holding it in a substantially vertical position, then said trolley (3) slides horizontally, preferably on rails (7), to assume an aligned position with the conveying roller (5) provided with a platform (4) with a retractable surface, which platform is disposed at the same level and contained in said roller, in which process said platform (4) with retractable surface is raised by way of known mechanical devices such as oleodynamic pistons, and comes into contact with the long product (2') which is unhooked from the engagement means of the trolley (3) and simultaneously supported and re-hooked by the retractable surface, then said retractable surface is returned to the horizontal position so that the long product (2') is deposited on the roller (5) which moves it away from the magazine.

9. A lifting device (8) of the type defined in claim 3 or claim 4 to be applied to a support frame for magazines of metal plates with a substantially vertical orientation.
